# EUROPEAN PATENT APPLICATION

(11) **EP 4 631 399 A1**
(43) Date of publication of application: **15.10.2025**
(21) Application number: 25169295.0
(22) Date of filing: 08.04.2025
(51) Int. Cl.: A47F 3/00

(54) **SERVICE IMPLEMENT AND METHOD FOR CONTROLLING AIR QUALITY OF A MUSEUM DISPLAY CASE**

(30) Priority: 12.04.2024 US 202418634042
(71) Applicant: Goppion S.p.A., 20090 Trezzano sul Naviglio (MI) (IT)
(72) Inventor: goppion, alessandro, 20090 Milano (IT); Breitung, Eric, Los Angeles, 90210 (US)
(74) Representative: Checcacci, Giorgio

(57) **Abstract**

A service implement (30) for a museum display case (10) has a panel (31) having shape and dimensions corresponding to those of a door (22) of a compartment (21) hosting hygroscopic material for the control of the relative humidity inside the museum display case (10). The panel (31) has at least a port (32) suitable for connection to an external source of air or for housing a detecting probe. With this service implement (30), the space provided for the compartment (21) with hygroscopic material becomes an easy access into the display case (10). Thus, before the display case (10) is used to accommodate delicate objects, it can be subject to treatment, monitoring or measuring relevant parameters inside the display case (10).

## Description

The present invention relates to museum display cases, i.e. display cases intended for being arranged in display rooms such as a museum, an exhibition or similar and intended for conserving and displaying items of cultural heritage, such as works of art, historical artefacts and similar, in a protected environment; in the following, the term display cases will sometimes be used for the sake of brevity, being it understood that reference is always made to museum display cases.

Museum display cases have to fulfil many requirements in order to guarantee both the correct protection and preservation of the objects exhibited therein and the best visibility of these objects for the public. Normally, these display cases comprise glass (or in any case transparent) walls assembled together and/or to a frame. Normally, one or more of the walls can be opened to allow access to the interior of the display case.

In many cases a museum display case must guarantee a total separation between the exterior environment and the display case's interior exhibition environment; this is the situation when the display case has to accommodate objects that would be damaged by the external environment. In this case, the museum display case is provided to be airtight and to be equipped with a system to control the internal climatic and air quality conditions, in order to have in the interior exhibition environment a predefined controlled atmosphere that is suitable for the objects exhibited. To this end, the various parts of the display case are assembled by bonding with suitable adhesives and sealing gaskets are provided at the openable walls. The interior environment is thus separated from the exterior environment and can be adequately controlled, with temperature conditioning, humidity conditioning and filtering systems.

However, it is not easy to ensure that the desired conditions are always met, particularly when the display case is not itself provided with a complex monitoring and adjusting system. This difficulty is particularly critical when the display case has to accommodate very delicate objects, susceptible to environment conditions.

It may be useful to have the possibility to control and possibly adjust from time to time the conditions inside a display case, even if the display case is not itself provided with a complex monitoring and environmental control system.

In accordance with various embodiments of the present invention, this problem is solved by a service implement or service console, as well as a method for controlling parameters inside a museum display case in accordance with the specification and claims of the application.

More particularly, a service implement for a museum display case of the type including a compartment hosting hygroscopic material for the control of the relative humidity inside the museum display case, comprises a panel having shape and dimensions corresponding to those of a door of the compartment, the panel being provided with at least a through passage. The compartment may be a drawer (in which case the door of the compartment is a front panel of the drawer that moves with the drawer) or a fixed internal space (in which case the door closes that space).

With this service implement, it becomes possible to perform several treatments, measurements, and controls inside the display case in an easy and effective way. The compartment provided for the hygroscopic material becomes an easy access to the inside of the display case to control, measure or perform treatments for adjusting the conditions within the display case, before the display case is used to accommodate delicate objects. The service implement may be marketed or sold as an independent accessory, and may be used in the display case for a few minutes or hours at a time. It allows controlled access to the interior of the display case, without having to open the display case.

Still according to the invention, said at least a through passage preferably includes a port, suitable for connection to an external source of air. This port can thus be used to feed into the display case air having suitable characteristics, to prepare the display case to accommodate the delicate objects. For example, fed air might have a low relative humidity, so as to facilitate the adjusting action of the hygroscopic material in the compartment. Still as an example, the fed air might be useful to replace the air in the display case, if the air in the display case contains volatile substances that could be dangerous for the exhibited objects. By means of this service implement, the display case might be subject to a heat treatment to remove VOCs (volatile organic compounds) or other volatile substances, as taught in co-pending US patent application no. 17/657,451, the contents of which are incorporated herein by reference in their entirety. Besides, the port can offer the possibility of inserting small items into the compartment, without opening the display case.

Indeed, the materials of the adhesives, of the gaskets and of other parts used for the construction of the structure of the display case (e.g., painted parts) have often the tendency to emit volatile substances harmful to exhibited objects, such as acids, aldehydes, amines, oximes, bases and other chemicals. In fact, many materials, especially plastics or synthetics, retain more or less large quantities of solvents and volatile chemicals used for production and tend to release them over time; moreover, certain materials gradually transform over time and tend to release volatile substances. If the display case is airtight, the volatile substances emitted towards the interior thereof remain trapped inside the display case. When removal of these substances is necessary or advisable for the specific objects to be accommodated in the display case, a heat treatment according to co-pending US patent application no. 17/657,451 becomes useful and can be performed by using the service implement disclosed in this specification prior to installation of objects to be displayed.

Still according to the invention, the port may be provided with a valve. In this way, the flow of air can be better controlled by means of the service implement itself.

Still according to the invention, the port may be provided with a filter. In this way, air fed to the inside of the display case can be cleaned before entering the display case.

Still according to the invention, the port may be provided with a removable cover, preferably sealingly engaged with the port. This cover makes it easy to keep the port closed when not in use.

Still according to the invention, said at least a through passage may include a through socket suitable for connection to a detecting probe.

Still according to the invention, the service implement may preferably comprise itself a detecting probe connected in the through socket, having a detecting end projecting from an internal side of the panel intended to face inside the museum display case and a control end accessible from an external side of the panel for connection to a control unit. Alternatively, the detecting probe can be separate and independent from the service implement, ready to be accommodated in the through socket. In both cases, the detecting probe is any of a gas sensor (e.g., CO₂, O₃, NOₓ, SOₓ, acid, reduced sulphides, etc.), particle counter, thermometer, a VOC detector, a hygrometer or a pressure gauge. Thanks to this detecting probe, it becomes possible to monitor in real time the conditions within the display case while the service implement is used.

Still according to the invention, said at least a through passage may preferably include a passage for an electric cable of an appliance to be placed inside the museum display case. Thus, it becomes possible to place and operate an appliance inside the display case. It might be a fan, to improve the distribution of fed air in all the volumes of the display case; it might also be a heater, to heat air fed through the port in the panel of the service implement. Still according to the invention, the panel may be provided with an electric unit, comprising a front side plug suitable for connection to a socket of an external electric cable and an internal side socket suitable for connection to a plug of an electric cable of an appliance inside the museum showcase.

Still according to the invention, the panel may be preferably provided with a gasket system, to ensure airtightness of the museum display case. This provision allows a full control of the internal parameters of the display case, avoiding uncontrolled passages of air, in both directions.

Still according to the invention, said at least a through passage preferably includes an exhaust outlet, to exhale air from the inside of the display case; the exhaust outlet can be provided with a control valve. Also, this provision helps allowing a full control of the treatment.

Still according to the invention, the exhaust outlet can be provided with a filter. The filter can be useful to prevent those undesired substances (such as for example allergenic dusts deriving from the objects displayed in the display case) are dispersed in the environment outside the display case.

Still according to the invention, the exhaust outlet may be provided with a removable cover, preferably sealingly engaged with the exhaust outlet. This cover makes it easy to keep the exhaust outlet closed when not in use.

The present invention also relates to a method for controlling parameters inside a museum display case of the type including a compartment hosting hygroscopic material for the control of the relative humidity inside the museum display case, the method comprising:
- removing a door of the compartment;
- replacing it with a service implement according the present specification;
- connecting an external source of air to a through passage of the panel of the service implement;
- feeding air through said through passage to the inside of the museum display case.

In a preferred embodiment, the method comprises any of the following:
- detecting content of VOCs inside the museum display case;
- detecting relative humidity inside the museum display case;
- detecting temperature inside the museum display case;
- detecting pressure inside the museum display case;
- detecting gases inside the museum display case;
- detecting dust levels inside the museum display case;
by means of a detecting probe inserted in the through passage.

These controls allow to monitor in real time the effect of any treatment inside the display case.

Preferably, the air fed through the service implement of the present invention has characteristics suitable to help keeping within pre-set limits any of the content of gases, particulates, VOCs, the relative humidity or the temperature of the air inside the museum display case. The fed air may be heated air, to perform a heat treatment in accordance with co-pending US patent application no. 17/657,451.

Further features and advantages of the embodiments of the invention will best be seen from the following description of a display case and a service implement according to the invention.

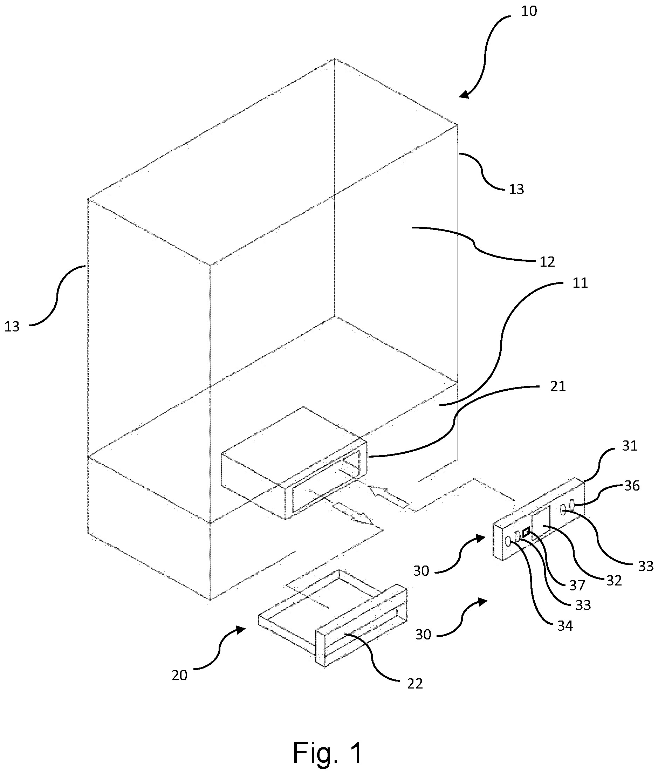

Fig. 1 shows a museum display case and a service implement in accordance with the present invention.
Fig. 2 is a front view on a larger scale of the service implement of Fig. 1.
Fig. 3 is a top plan view of the service implement of Fig. 2.
Fig. 4 is a back view of the service implement of Fig. 2.

In the drawings, a display case 10 is shown schematically. It includes a base 11 and a display space 12 above the base 11, surrounded and delimited by transparent walls 13. It should be noted that the display case 10 is shown only schematically and all its details that are not relevant to this invention are not shown or shown only partially.

The display case 10 is of the type that includes a drawer 20 for housing a hygroscopic material, such as silica gel. The drawer 20 is housed in a drawer compartment 21, provided in the base 11 of the display case 10. The compartment 21 is faced to the inside of the display case 10, so that the hygroscopic material in the drawer 20 is in contact with the air inside the display space 12, in order to control its relative humidity. The drawer 20 has a front panel 22, conventionally provided with a gasket system (not shown) to rest airtight against the compartment 21; thus, the front panel 22 is a door of the compartment 21 and keeps the display case 10 hermetically sealed.

According to the present invention, a service implement 30 is provided for the display case 10. The service implement 30 includes a panel 31, having shape and dimensions corresponding to those of the front panel 22 of the drawer 20.

The panel 31 is provided with a port 32, that has shape and size suitable to allow coupling with a source of air (e.g. a tube, not shown), external to the display case 10. The port 32 can be provided with a valve and/or with a filter and/or with a removable cover.

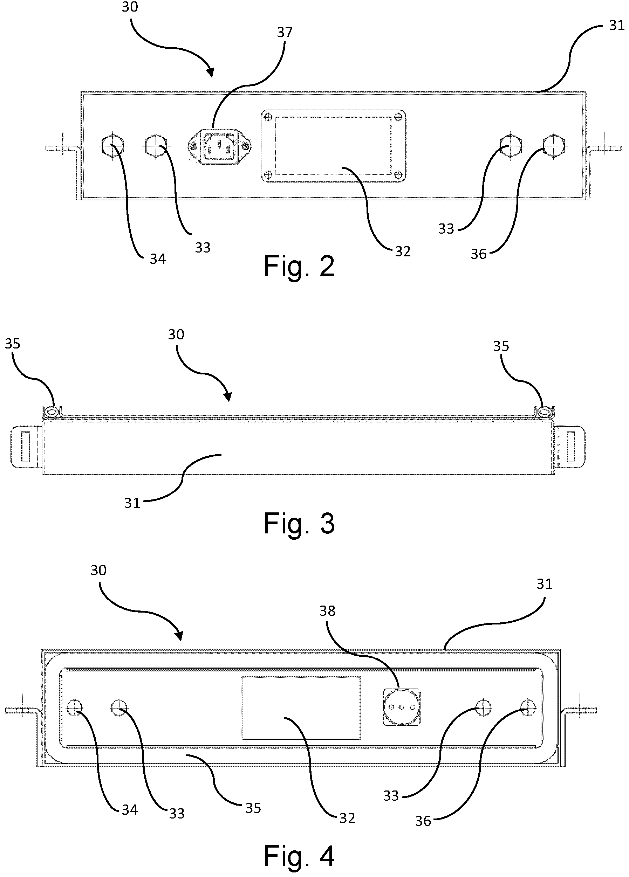

The panel 31 is also provided with one or more through sockets 33 (two of them are shown in Fig. 2), that are each suitable to house a detecting probe (not shown), such as a VOCs detector, a thermometer, a hygrometer, a pressure gauge: the detecting probe can be housed in the through socket 33 with a detecting end that projects into the display case 10 and a control end that projects out of the display case 10, for connection to a control unit (not shown).

The panel 31 is also provided with a passage 34 for an electric cable (not shown) of an appliance to be placed inside the display case 10. The appliance (not shown) may be -for example- a fan or a heater.

The panel 31 is also provided with a peripheral gasket system 35, extending along all sides of the panel 31 and corresponding to the gasket system of the drawer 20. Therefore, the panel 31 is airtight when applied to the compartment 21 in place of the drawer 20. Besides, the panel 31 is provided with an exhaust outlet 36, to exhale air from the display case 10.

The panel 31 is further provided with an electric unit, this unit comprising a front side plug 37 (or male connector) and an internal side socket 38 (or female connector). The plug 37 allows connection to a socket of an external electric cable (not shown) while the socket 38 allows connection to a plug of an electric cable of an appliance (both not shown) inside the museum display case 10.

The service implement 30 can be used for many purposes. For example, it can be used facilitate elimination from the inside of the display case 10 of volatile substances that are dangerous for delicate objects to be displayed in the display case 10. To that purpose, before accommodating any such delicate object inside the display case 10, the drawer 20 is removed and in its place the service implement 30 is placed. The gasket system 35 ensures that the connection between the service implement 30 and the compartment 21 is airtight.

Then, the port 32 is connected to an external source of heated air, so that heated air is fed to the inside of the display case 10. Thanks to this treatment, as taught by the co-pending US patent application no. 17/657,451, volatile substances that are potentially dangerous for the displayed objects are removed from the materials of the display case 10. If this treatment is advantageously monitored in real time by means of a VOCs detector and/or a thermometer and/or a hygrometer housed in the through socket 33, it can be better controlled, e.g. to understand when the flow of heated air can be interrupted, and the treatment terminated.

The service implement 30 can be useful also for other treatments and controls. For example, it can be used to check the internal conditions of the display case 10 (temperature and/or relative humidity) if the display case 10 is not provided itself with its specific detecting instruments.

The service implement 30 can be used also for controlling the tightness of the display case 10, by blowing air under pressure into the display case 10 and controlling how the pressure is maintained.

The presence of the exhaust outlet 36 facilitates the outflow of the air, that can easily exit the display case 10, if needed during any treatment.

## Claims

1. A service implement for a museum display case (10), the service implement comprising:
a panel (31) having a port (32),
wherein the panel (31) has a shape and dimensions corresponding to those of a door (22) of a compartment (21) hosting hygroscopic material for control of relative humidity inside the museum display case (10).

2. The service implement according to claim 1, wherein the port (32) is provided with a removable cover, and the removable cover is engaged with the port (32) such that the port (32) is closed when not in use.

3. The service implement according to claim 1, further comprising a through socket (33) suitable for connection to a detecting probe.

4. The service implement according to claim 6, further comprising the detecting probe connected in the through socket (33), the detecting probe having a detecting end projecting from an internal side of the panel (31) to face inside the museum display case (10) and having a control end accessible from an external side of the panel (31) for connection to a control unit.

5. The service implement according to claim 1, further comprising a passage (34) for an electric cable of an appliance to be placed inside the museum display case (10).

6. The service implement according to claim 1, wherein the panel (31) is provided with a gasket system (35), the gasket system (35) to ensure air tightness of the museum display case (10).

7. The service implement according to claim 1, further comprising an exhaust outlet (36), the exhaust outlet (36) to exhale air from inside the museum display case (10).

8. The service implement according to claim 7, wherein the exhaust outlet (36) is provided with a filter.

9. The service implement according to claim 7, wherein the exhaust outlet (36) is provided with a removable cover, and the removable cover is engaged with the exhaust outlet (36) such that the exhaust outlet (36) is closed when not in use.

10. The service implement according to claim 1, wherein the panel (31) is provided with an electric unit (37, 38), the electric unit (37, 38) comprising a front side plug (37) for connection to a socket of an external electric cable and an internal side socket (38) for connection to a plug of an electric cable of an appliance inside the museum display case.

11. A method for controlling parameters inside a museum display case (10), the method comprising:
(a) removing a door (22) of a compartment (21) hosting hygroscopic material for control of relative humidity inside the museum display case (10);
(b) replacing the door (22) with a service implement (30) according to any of preceding claims;
(c) connecting an external source of air to the port (32) of the panel (31) of the service implement (30); and
(d) feeding fed air through the port (32) to an inside of the museum display case (10).

12. The method according to claim 11, further comprising any of the following:
(e1) detecting content of VOCs inside the museum display case (10);
(e2) detecting relative humidity inside the museum display case (10);
(e3) detecting temperature inside the museum display case (10);
(e4) detecting pressure inside the museum display case (10);
(e5) detecting gases inside the museum display case (10);
(e6) detecting dust levels inside the museum display case (10);
by a detecting probe mounted to said service implement (30).

13. The method according to claim 11, wherein the fed air has characteristics suitable to help keep any of the content of VOCs, chemicals, particulates, gases, relative humidity and temperature of the air inside the museum display case (10) within pre-set limits.

14. The method according to claim 11, wherein the fed air is heated air.
